# EUROPÄISCHE PATENTSCHRIFT

(11) **EP 0 997 376 B1**
(45) Veröffentlichungstag und Bekanntmachung des Hinweises auf die Patenterteilung: **01.12.2004**
(21) Anmeldenummer: 99121381.0
(22) Anmeldetag: 27.10.1999
(51) Int. Cl.: B64D 33/02, B64C 21/02

(54) **Lufteinlass**
Air inlet
Entrée d'air

(30) Priorität: 30.10.1998 DE 19850093
(43) Veröffentlichungstag der Anmeldung: 03.05.2000
(73) Patentinhaber: Airbus Deutschland GmbH, 21129 Hamburg (DE)
(72) Erfinder: Scherer, Thomas, Dr.-Ing., 22599 Hamburg (DE); Buchholz, Uwe, Dipl.-Ing., 21640 Bliedersdorf (DE)
(74) Vertreter: Hansmann, Dierk, Dipl.-Ing.

(56) Entgegenhaltungen:
- EP-A- 0 926 064
- US-A- 3 750 689
- US-A- 3 770 228
- US-A- 4 174 083

## Beschreibung

Die Erfindung bezieht sich auf einen Lufteinlaß gemäß dem Oberbegriff des Anspruchs 1. Die Anwendung der Erfindung ist für alle luftsaugenden Systeme eines Flugzeuges geeignet, deren Lufteinlaß im Flug sowie am Boden optimalen Druckrückgewinn und minimalen Interferenzwiderstand bereitstellen soll.

Im Flugzeugbau sind verschiedenen Lufteinlaßsysteme (Staulufteinlässe) geläufig, die mit versenkbaren Kanaleinläufen an verschiedenen aerodynamischen Bereichen eines Flugzeuges realisiert sind. Mit ihnen wird während des Fluges die Ablenkung der Grenzschichtströmung von außerhalb des Flugzeuges umgesetzt, damit die Luft der Grenzschicht ins Innere des Flugzeuges strömen kann. Der Fachwelt ist gleichfalls auch ein von der NACA (National Advisory Commity for Aeronautics) entwickelter (sogenannter) NACA-Senkeinlauf bekannt, der für Luftsaugsysteme eingesetzt wird. Als Vorbild dafür werden die einem Flugzeug installierten APU-Einläufe, Pack-Ram-Kanaleinläufe, Belly-Fairing-Ventilationseinläufe erwähnt. Diese flugzeugtypisch eingesetzten NACA-Senkeinläufe dienen hauptsächlich der Luftversorgung kleinerer Nebenaggregate, beispielsweise als Stauluft-Einlaß (Ram Air Inlet) für die Kühlluftzuführung zur Klimaanlage (Packs). Um für die Kühlung der triebwerksbezogenen Zapfluft (Bleed Air) in den Wärmetauschern der Klimaregelanlage (Air-Conditioning-Systems) kühle Luft zur Verfügung zu stellen, wird dieser NACA-Senkeinlauf bekannterweise bei den Flugzeugen der Airbus-Familie in der Belly Fairing (Bauchverkleidung) platziert. Um dem Hilfstriebwerk (Auxiliary Power Unit), auch APU genannt, Luft zuzufügen, ist ferner an der Rumpfunterseite im Bereich des Höhenleitwerkes ein mit parallelen Wänden versehener NACA-Senkeinlauf eingebaut. Der Packbay-Ventilation-Inlet (Klimaraum-Belüftungs-Einlaß) dient zum einen zur Temperierung der Flugzeugstruktur und zum anderen der Belüftung der Packbay. Dieser Einlauf ist im vorderen Bereich der Belly Fairing platziert. Außerdem sind an der Cowling (Verkleidung) des Triebwerkes zwei Senkeinläufe vorhanden. Ein Senkeinlauf dient zur Kühlluftzuführung, um eine erste Kühlung der entnommenen (Bleed Air) zu bewirken. Der zweite Senkeinlauf wird zur Belüftung des Zwischenraumes: Triebwerk - Cowling genutzt. Abschließend wird vollständigkeitshalber erwähnt, daß zur Belüftung der Treibstofftanks im äußeren Bereich der Tragflächenunterseite ein Wingtank Inlet (Flügeltank-Einlaß) angebracht ist, um so einen Druckausgleich zu ermöglichen.

Alle diese versenkten Lufteinläufe erzeugen durch ihre Einlaufgeometrie und insbesondere durch die im Fluge angeströmten Einlaufkanten ein Luftwirbelpaar, welches die energiereiche Luft der Grenzschicht in den Einlauf transportiert. Hierbei findet während des Fluges ein nutzbarer Druckrückgewinn für das stromabliegende Luftleitungssystem statt, der für einen Massenstrom-Lufttransport sorgt. Der Bezug sonstiger notwendiger Turbomaschinensaugleistung kann in dieser Situation erheblich verringert werden oder gänzlich entfallen. Die Bereitstellung der (notwendigen) aerodynamischen Energie zur Luftversorgung der nehmlichen Nebenaggregate während des Reisefluges entsteht allein durch die Flugzeugbewegung, genauer durch die aerodynamische Anströmung der Einlaufkanten des (betreffenden) NACA-Senkeinlaufs. Am Boden (bzw. in Parkstellung des Flugzeuges) wird diese aerodynamische Anströmung ausbleiben. Sie wird auch bei einer noch mit Bodenkontakt des Fahrwerkes stattfindenden langsamen Bewegung des Flugzeuges auf der Start- und Landepiste (bis zum Zeitpunkt der beginnenden aerodynamischen Anströmung des betreffenden Lufteinlasses) ausbleiben. Während dieses Zeitraumes wird über den betreffenden Lufteinlaß (NACA-Senkeinlauf) entsprechende Außenluft zur Versorgung der Nebenaggregate des Flugzeuges angesaugt. Im Vergleich zu der stattfindenden Anströmung der Einlaufkanten des (betreffenden) Lufteinlasses (NACA-Senkeinlaufs) im Flugmode wird im zuletzt genannten Zeitraum ein völlig verändertes Strömungsbild am Einlauf vorhanden sein. Dabei wird infolge der stattfindenden Luftansaugung die 180-Grad-gekrümmte Oberfläche des Nasenbereiches der (im Flugmode aerodynamisch angeströmten) NACA-Einlauflippe vollständig umströmt. Die Luftströmung wird während der Luftsaugung, die eine dem Einlauf über ein Luftleitungssystem verbundene Luftsaugquelle (eine Lüftereinheit) realisiert, beiderseits und nahe der dem Lufteinlaß angrenzenden aerodynamischen Außenhautbereiche des Flugzeuges einsetzen und über die Lufteinlaß-Öffnung in das angeschlossene Luftleitungssystem einströmen. Oberhalb dem ausgangs der Abschrägung folgenden (nicht sichtbaren) Flächenbereich der Einlauflippe, welcher der Nasenkrümmung nachfolgend angeordnet ist, wird eine blasenartige Strömungsablösung der angesaugten Luft, die infolge der 180-Grad-Luftumströmung des Nasenbereiches der NACA-Einlauflippe während des Absaugvorganges einsetzt, zu beklagen sein. Dabei wird sich die Ablöseblase in das nachgeordnete Luftleitungssystem (den angeschlossenen Luftkanal) fortsetzten. Dieser Umstand wird zu hohen Einlaufverlusten führen, wodurch sich die (theoretisch verfügbare) Luftleistung (abzüglich des Einlaufverlustes) entsprechend verringert.

Ferner wird von Klas (Michael Klas, Matr. Nr. 041101: Theoretische Untersuchung zur Erhöhung des Durchsatzes am Stauluftkanal der Klimaanlage am Beispiel des Airbus A330 / A340, Kapitel 5, 5.2.6.2 Vorprofil, Seite 66; Diplomarbeit, Fachhochschule Aachen, August 1996) angeregt, daß "die Anbringung eines flügelähnlichen Profils auf der Oberfläche des Flugzeuges vor dem (NACA-)Senkeinlauf die Stromlinien der vorbeiströmenden Luft beeinflussen würde. Die Ablenkung der Stromlinien nach dem Profil ermöglicht es der oberen energiereichen Grenzschichtluft in den Kanaleinlauf zu strömen. Somit dürfte neben der geringen Widerstandserhöhung durch das Profil ebenfalls eine Erhöhung des Staudruckrückgewinnungsverhältnisses auftreten." Vorsorglich dazu teilt Klas der Fachwelt mit, daß "einen Aufschluß über die Größe der Wölbung und den günstigen Abstand des Profils zum Einlauf, um eine effektive Ablenkung der Außenströmung zu erzielen, wiederum nur eine Windkanaluntersuchung bzw. eine Computersimulation erbringen kann." Die Bemerkungen von Klas werden durch eine Abbildung 5.11 ergänzt, aus der man den Aufbau des Lufteinlaufs [mit der luftangeströmten Einlauflippe / dem längsabgesenkten Kanaleinlauf / dem (auf der Oberfläche der aerodynamischen Fläche eines Flugzeuges) vor dem Senkeinlauf (fest) angeordneten Vorprofil] und den Stromlinienverlauf der Grenzschicht entnehmen kann. Mit dieser Anregung wird der Fachwelt eine Möglichkeit der Verbesserung des Einströmverhaltens der freien Außenströmung der Grenzschicht in den (NACA-)Senkeinlauf während des Reisefluges eines Flugzeuges vermittelt. Die Betrachtungen des Autors geben aber keinen Aufschluß über das veränderte Strömungsbild von in einen Lufteinlaß angesaugter Luft und die damit verbundenen Nachteile, die vorab - für ein am Boden parkendes oder sich noch mit Bodenkontakt des Fahrwerks langsam bewegendes Flugzeuges - erwähnt sind.

Außerdem ist unter dem Aspekt der Strömungsbeeinflußung aus der US-A 4,174,083 ein Lösungskonzept der Firma BOEING bekannt, wonach ein deltaförmiger Flügel über dem Einlaufbereich eines sogenannten (vorab erwähnten) NACA-Einlaufes mit einer speziellen Neigung in die Außenströmung gefahren wird. Dieser Flügel bewirkt bei maximaler Öffnung der Einlaufklappe eine Veränderung der Luftströmung außerhalb des Einlaufs. Durch die zum Einlauf hin geneigte Flügelform wird die energiereichere freie Außenströmung zu dem hinteren Bereich des Einlaufs abgelenkt. Das an den Flügelkanten entstehende Wirbelpaar wird ebenfalls von dem Kanaleinlauf geschluckt, so daß durch die Wirbel keine zusätzlichen Widerstände entstehen. Bei diesem von BOEING präsentierten Prinzip kommt es allerdings erst bei einer sehr weit geöffneten Klappenstellung zu einer Druckerhöhung durch die in den Kanaleinlauf eintretende abgelenkte Luftströmung.

Bei geschlossener und bei einem Großteil der geöffneten Klappenstellung tritt die abgelenkte Luft nicht in den Kanal des Senkeinlaufs ein. Somit verursacht das Wirbelpaar im weiteren Verlauf erhöhte Widerstandsbeiwerte infolge der Wirbelbildungen. Da für diese Einzelkonfiguration keine näheren Angaben bezüglich des Staudruckrückgewinnungsverhältnisses und des Widerstandsbeiwertes offenbart werden, wird man die Effizienz einer solchen Strömungsbeeinflussung erst im Windkanalversuch feststellen.

Weiterhin sind der Fachwelt mit der US-A 3,652,036, insbesondere nach den Figuren 1 bis 5 mit entsprechenden Bilderläuterungen, sowie mit der DE-AS 1 139 701, insbesondere nach den Figuren 1 und 2 mit entsprechenden Bilderläuterungen, und mit der US-A 3,222,863, insbesondere nach den Figuren 1 bis 4 mit entsprechender Bildererläuterung, weitere Lösungen zur Vorsehung von entsprechenden Maßnahmen der Strömungsbeeinflußung an der Einlauflippe von Triebwerkseinläufen bekannt. Diese Maßnahmen auch an der Einlauflippe eines NACA-Einlaufs vorzusehen, kann dem Stand der Technik jedoch so nicht entnommen werden.

Aus EP 0 926 064 ist ein Senkeinlauf bekannt, der ein an der Einlauflippe angebrachtes Luftleitelement aufweist um strömungsindusierte Varitätsresonanten zu vermeiden.

US 3 750 689 zeigt einen Triebwerkseinlaß mit einer an der Einlauflippe angewachten Spaltklappe zur Vermeidung von Strömungsablösung auf der Innenseite der Einlauflippe.

Ebenfalls zur Vermeidung von Strömungsablösung sind in US 3 770 228 an der Außenseite der Einlauflippe eines Triebwerkseinlaßes Lufleitklappen angebracht.

Demzufolge liegt der Erfindung die Aufgabe zugrunde, einen gattungsgemäßen Lufteinlaß für ein Flugzeug derart zu gestalten, daß eine blasenartige Strömungsablösung der angesaugten Außenluft innerhalb des Senkeinlaufes verhindert wird.

Diese Aufgabe wird durch die in den Ansprüchen 1 und 3 angegebene "Maßnahme" gelöst. In den weiteren Ansprüchen sind zweckmäßige Ausgestaltungen dieser Maßnahme angegeben.

Die Erfindung ist in einem Ausführungsbeispiel anhand der beigefügten Zeichnungen näher beschrieben. Es zeigen
- Fig. 1: einen im Reiseflug des Flugzeuges angeströmten Lufteinlaß und das Strömungsbild der in den Lufteinlaß eintretenden Grenzschicht (Stauluft);
- Fig. 1a: den Lufteinlaß nach Fig. 1 des am Boden parkenden Flugzeuges und das Strömungsbild der in den Lufteinlaß angesaugten Außenluft;
- Fig. 2: den Lufteinlaß nach der Fig. 1a mit einem vor der Einlauflippe angeordneten Vorflügel und das Strömungsbild der in den Lufteinlaß angesaugten Außenluft;
- Fig. 3: das Detail A nach der Fig. 2;
- Fig. 4: den Lufteinlaß nach der Fig. 1a mit einer an der Einlauflippe befestigten Luftleitklappe und das Strömungsbild der in den Lufteinlaß angesaugten Außenluft.

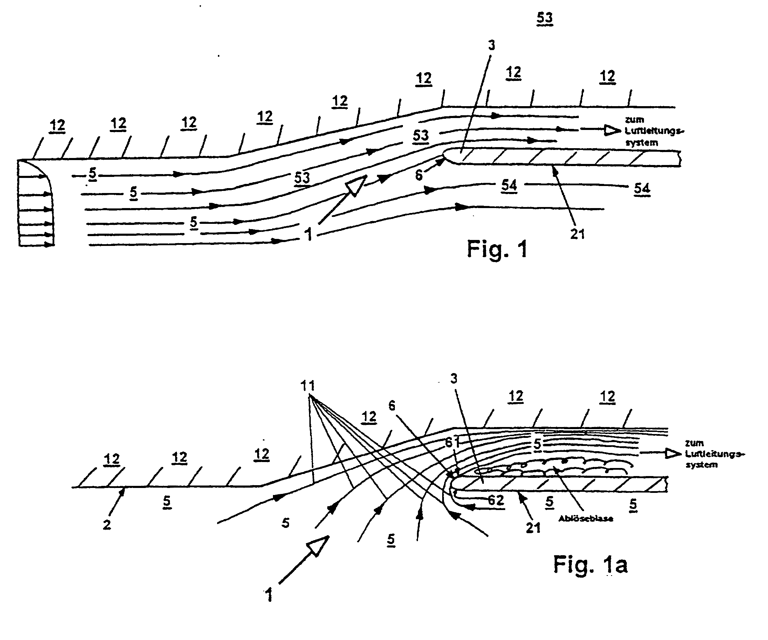

In der Fig. 1 wird nun ein Lufteinlaß, welcher einer luftumströmten aerodynamischen Fläche 2 eines Flugzeuges platziert ist, vorgestellt. Dabei wird die aerodynamische Fläche 2, unter der man eine von Außenluft 5 umgebene Außenhaut des Flugzeuges versteht, auf den Außenbereichen einer Flugzeugstruktur 12 befestigt. Der (vorgestellte) Lufteinlaß entspricht dem eingangs erwähnten NACA- Senkeinlauf, der auch am Airbus A340 eingesetzt wird. Man erkennt dabei, daß der Einlaufquerschnitt des NACA- Senkeinlaufes vollkommen in die Außenkontur der aerodynamischen Fläche 2 (bzw. in die Oberfläche der Außenhaut) des Flugzeuges eintaucht, deswegen er eine andere aerodynamische Funktionsweise - als halbversenkte oder äußere Lufteinlaßsysteme - aufweist. So wird für diese Art von Lufteinlaßsystem während des Fluges des Flugzeuges eine Ablenkung der örtlichen Grenzschicht erfolgen, um zur gewollten Kaltluftversorgung diverser Nebenaggregate kühle Außenluft 5 ins Innere leiten zu können. Der Aufbau des Lufteinlasses wird weitestgehend von der Einlaufgeometrie eines Kanal-Einlaufes 1 bestimmt, der der (den) aerodynamischen Fläche(n) 1 längsabgesenkt der Flugzeugstruktur 12 eingelassen ist. Dabei liegt der (im Längsschnitt dargestellte) offene Querschnitt des Kanal-Einlaufes 1 (der sogenannte Einlaufquerschnitt) oberflächenkonform der aerodynamischen Fläche 1 (der Außenhaut des Flugzeuges).

Mit einem Vorgriff auf die folgenden Ausführungsformen wird zudem ergänzt, das der offene Querschnitt des Kanal-Einlauf 1 mit einer sogenannten Einlauflippe 3 eingegrenzt wird. Die Einlauflippe 3 bezieht sich auf einen plattenartigen Körper, dessen quer zur Rumpfachse verlaufender Kantenbereich eine 180-Grad-Krümmung aufweist, deshalb als Nasenbereich 6 bezeichnet wird. Dieser (im Flugmode des Flugzeuges) angeströmte Nasenbereich 6 wird etwa ausgangs der Längsabschrägung (gemeinsam mit der außenhautgeschützten Flugzeugstruktur 12) den innenbefindlichen offenen Querschnitt des Kanal-Einlaufes 1 eingrenzen, wobei der Kanal-Einlauf 1 mit dem Ende der gestreckte Länge des plattenförmigen Körpers abschließt. Dieser (quer zur Rumpfachse) befindliche Körper-Endbereich (endseitig der gestreckten Länge) ist mit der angrenzenden (nicht gezeigten) Flugzeugstruktur 12 mechanisch verbunden, wobei der aerodynamische Flächenbereich 21 (bzw. der Außenflächenbereich) der Einlauflippe 3, der sich über die gestreckten Länge des plattenförmigen Körpers aufspannt, oberflächenkonform mit der aerodynamischen Fläche 2 (bzw. der Außenhaut) des Flugzeuges abschließt.

Nach der Fig. 1 wird der offene Querschnitt des Kanal-Einlaufs 1 (in Richtung der Rumpfachse des Flugzeuges betrachtet) einerseits durch eine - an der Stelle des Einsetzens der Längsabschrägung - (einsetzende) Kante an der aerodynamischen Fläche 2 und andererseits durch die (der Kante gegenüberliegende) luftangeströmte Einlauflippe 3 begrenzt. Mit den außerdem vorhandenen (in Richtung der Rumpfachse des Flugzeuges) (längs)verlaufenden Seitenkanten der Fläche 2 wird der offene Querschnitt des Einlauf-Kanals 1 umfänglich begrenzt. Aus dem Strömungsbild der in den Lufteinlaß (bzw. in den offenen Querschnittdes Kanal-Einlaufes 1) einströmenden Außenluft 5 der Grenzschicht nach Fig. 1 (ohne Ansaugung) wird der Fachmann das ihm bekannte Strömungsverhalten der Luft erkennen, die dann in das (dem Kanal-Einlaufes 1 angeschlossene) Luftleitungssystem bis an die (nicht gezeigten) Nebenaggregate weitergeleitet wird.

Die nachfolgenden Ausführungen verzichten bewußt auf die in dieser Situation stattfindenden - komplexen - aerodynamischen Strömungsvorgänge im Kanalinneren sowie auf den genannten äußeren und inneren Flächenbereichen [gemeint: auf dem sogenannten aerodynamischen Flächenbereich 21) und auf der (sich dem abgeschrägten Kanal-Einlauf 1 anschließenden) Innenfläche der Einlauflippe 3].

Nur soweit wird ergänzt, daß die Lippenkonstruktion der Einlauflippe 3 maßgebend ist für die innere und äußere Luftströmung über der Lippenoberfläche. So wird durch die Auslegung der Einlauflippe 3 das weitere Strömungsverhalten der Luft, also im anschließenden Rohrkanal (des nicht gezeigten Luftleitungsystems) und über der Außenhautoberfläche des Flugzeuges, bestimmt. Dabei werden die aerodynamischen Strömungsvorgänge im Kanalinneren und auf der Außenfläche der Einlauflippe 3 durch deren Krümmung und dem Nasenradius der Einlauflippe 3 maßgeblich beeinflußt.

Diese Tatsache erscheint insofern von Interesse, falls man die Aufmerksamkeit auf das Strömungsbild der in den Lufteinlaß (NACA-Senkeinlauf) nach der Fig. 1a angesaugten Außenluft 5 bei einem am Boden parkenden Flugzeug lenkt. Der Lufteinlaß entspricht dem Vorbild nach der Fig. 1, wobei in dieser Situation die kalte Außenluft 5 (wegen fehlender Anströmung der Einlauflippe 3, die im Flugmode gegeben ist) über eine dem Luftleitungssystem angeschlossene Luftsaugquelle in den (nicht gezeigten) Rohrleitungskanal angesaugt wird.

Beeinflußt durch die vorgeschilderte Lippengestalt (Krümmung der Außenfläche der Einlauflippe 3 und deren Nasenradius) wird die äußere Strömung der Außenluft 5 über den gekrümmten Nasenbereich 6 (die Lippenoberfläche) und die effektive vorhandene Saugleistung wird auch - in dieser Situation - die nahe dem aerodynamischen Flächenbereich 21 (dem Außenbereich) der Einlauflippe 3 sich befindende Außenluft 5 vom Saugvorgang mit erfaßt. Dabei wird das Strömungsverhalten der angesaugten Außenluft 5 dermaßen beeinflußt, wonach die Luftstrahlen 11 dieser Außenluft 5 an der Nasenoberfläche anliegen oder in ihrer Nähe vorbeiströmen und dabei der Krümmung des Nasenbereiches 6 folgend in das Innere des Kanaleinlaufes 1 (mit einem Eintrittswinkel, der der Nasenkrümmung am oberen Nasenrand 61 entspricht,) einströmen. Infolge dessen (bzw. beeinflußt durch die Strömungsrichtung, die Strömungsgeschwindigkeit ect.) wird auf dem inneren (bzw. im Inneren des Kanal-Einlaufes 1 sich befindenden) (Ober-)Flächenbereich der Einlauflippe 3, der eine glatte Oberfläche aufweist, ein Rückströmgebiet produziert werden, der dem Fachmann als Strömungsablösung (von dieser Oberfläche) bekannt ist. Die Strömungsablösung (dieses Teiles der angesaugten Außenluft 5) wird mit einer am oder nahe dem oberen Nasenrand 61 einsetzenden Ablöseblase einsetzen und sich in Ansaugrichtung (mit den eingangs erwähnten Nachteilen) entlang des angeschlossenen Rohrkanales fortpflanzen. Auf den Strahlenverlauf der weiteren Teile der angesaugten Außenluft 5 wird nicht näher eingegangen, weil er etwa dem Strömungsverhalten nach der Fig. 1 entspricht und außerdem keinen oder nur kaum einen mindernden Einfluß auf die Ablöseblase ausüben wird.

Allgemein läßt sich der vorbeschriebene Nachteil des Strömungsverhaltens [der in den Lufteinlaß (NACA- Senkeinlauf) angesaugten Außenluft 5] dermaßen begünstigend (bis zur Vermeidung der Strömungsablösung) beeinflußen, wonach man vor dem Nasenbereich 6 der Einlauflippe 3 ein sogenanntes aerodynamisches Luftleitelement 4 (allgemein betrachtet) anordnet, mit dem man die Luftströmung der in den Kanal-Einlauf 1 (des NACA-Senkeinlaufes) angesaugten Außenluft 5 - des am Boden parkenden oder mit Bodenhaftung rollenden Flugzeuges - zu Teilen durch einen Luftspalt 51 zwangsweise führt, ohne das im Inneren des Kanaleinlaufes 1 auf dem innenliegenden (Ober)Flächenbereich der Einlauflippe 3 ein Strömungsablösung eintreffen wird.

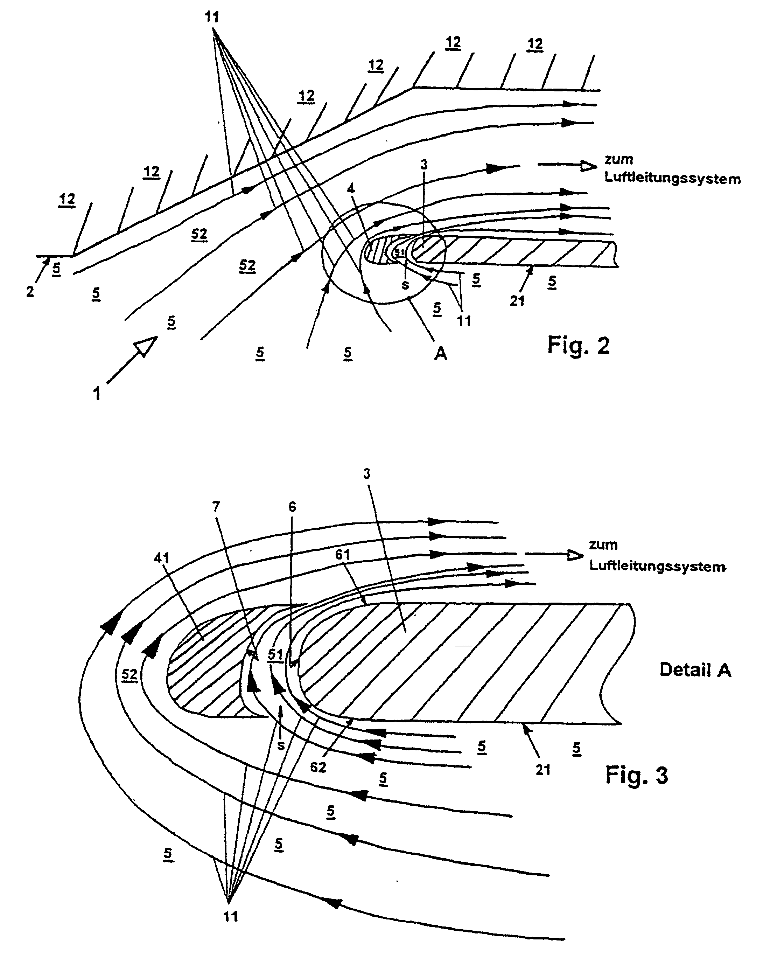

In der Fig. 2 wird eine Ausführungsform vorgestellt, mit der man dem Übel der Strömungsablösung - beim Ansaugen der Außenluft 5 in den Lufteinlaß - abhelfen kann. Danach wird man unmittelbar vor dem Nasenbereich 6 der Einlauflippe 3 das vorerwähnte Luftleitelement 4, das als Vorflügel 41 ausgebildet ist, anordnen.
Dabei handelt es sich um einen Vorflügel 41, der dem Vorbild einer - der Fachwelt an sich bekannten - Spaltklappe, die eigentlich zur Beeinflußung anderer aerodynamischer Zusammmenhänge am Flugzeugflügel eingesetzt wird, entspricht.

Dabei wendet sich der Nasenbereich 6 der Einlauflippe 3 der rückseitigen Oberfläche 7 des Vorflügels 41 zu. Diese rückseitige Oberfläche des Vorflügels 41 weist eine der Nasenkrümmung der Einlauflippe 3 äquivalente Krümmung (mit etwa gleichem Krümmungsradius) auf, wobei die zueinander stehenden Oberfächen (des Vorflügels und der Einlauflippe 3) einen Luftspalt s einschließen. Durch diesen Spalt s wird eine Außenluft-Teilmenge 51 der (am aerodynamischen Flächenbereich 21 der Einlauflippe 3 befindlichen) Außenluft 5 angesaugt, die der Spaltgeometrie folgt und durch den Spalt s zwangsgeführt beschleunigt umgelenkt wird, wobei es - infolge des mit der Umlenkung korrelierenden Eintrittswinkels der Luftströmung - keine Strömungsablösung einsetzen wird. Dieser Eintrittswinkel der am (zum Inneren des Kanal-Einganges 1 gerichteten) Spaltende austretenden angesaugten Luftströmung ist kleiner dem vorerwähnten Eintrittswinkel der Luftströmung nach der Fig. 1a. Die sich nahe der aerodynamischen Fläche 2 (außerhalb des Flugzeuges) und nahe dem offenen Querschnitt des Kanal-Einlaufes 1 befindende(n) Außenluft 5 (Außenluftmenge) wird durch den stattfindenden Ansaugvorgang in den offenen Querschnitt des Kanal-Einlaufes 1 einströmen.

Sie wird als Außenluft-Teilmenge 52 in die Abschrägung eintreten und zusammengeführt mit dem der Außenluft-Teilmenge 51 den Strömungsweg in das Luftleitungssystem bis an die Nebenaggregate fortsetzen, wobei das Strömungsverhalten Außenluft-Teilmenge 52 auch mit durch die Krümmung der vorderseitigen Oberfläche des Vorflügels 41 beeinflußt wird.

Die Fig. 3 vermittelt dem Betrachter einen Ausschnitt A aus der Fig. 2, den sie als Detail A darstellt. Aus der Darstellung des Details A kann man das vorerwähnte Strömungsverhalten beider Außenluft-Teilmengen 51, 52 (nach der in Fig. 2 gezeigten Anordnung) anschaulicher erkennen. Dabei wird der zwangsgeführte Verlauf der geteilten Luftströme (genannter Außenluft-Teilmengen 51, 52), der mit dem vorab angedeuteten Strömungsverlauf korreliert, deutlicher hervorgehoben, wonach die Luftstrahlen 11 einmal den Spalt s passieren und gleichsam an der vorderseitigen Oberfläche des Vorflügels 41 entlang strömen.
Der Spalt s kann als Düse ausgeformt sein, um eine Beschleunigung der Außenluft-Teilmenge 51 zu erreichen und ein effektives Anliegen der Außenluft-Teilmenge 52 auf dem innenliegenden (Ober)Flächenbereich der Einlauflippe 3 im Inneren des Kanal-Einlaufs 1 zu erzielen. Dabei vermindert sich der Querschnitt des Spaltes s allmählich bis auf ein bestimmtes offenes Querschnittsmaß, wodurch eine Beschleunigung der angesaugten Außenluft-Teilmenge 51 durch den Spalt s einsetzen wird.

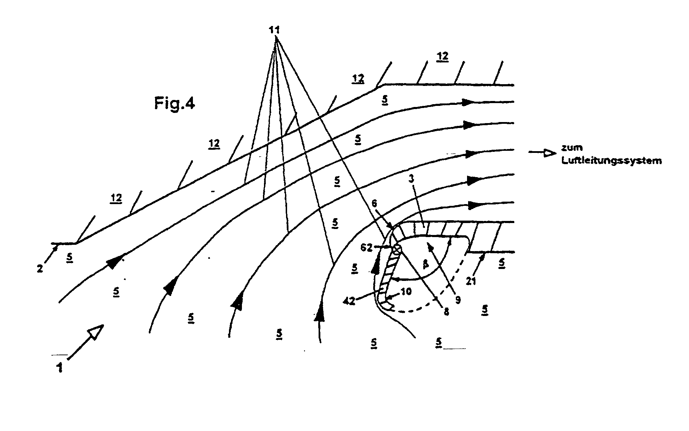

In der Fig. 4 wird eine weitere Ausführungsform vorgestellt, mit der man ebenso das Übel der Strömungsablösung - beim Ansaugen der Außenluft 5 in den Lufteinlaß - abstellen kann. Danach wird am Nasenbereich 6 der Einlauflippe 3 eine weitestgehend ebenflächige Luftleitklappe 42 befestigt, die der Fachwelt auch als Krügerklappe in der Tragflügelaerodynamik bekannt ist. Zudem wird erwähnt, daß die Einlauflippe 3 mit einer Ausnehmung 9 versehen ist, welche - (ziemlich) nahe dem unteren Nasenrand 62 des Nasenbereiches 6 einsetzt und danach sich vom Nasenrand 62 horizontal verlaufend entfernt - dem aerodynamischen Flächenbereich 21 ausgenommen ist. Die Ausnehmung 9 ist dem Körpervolumen der nehmlichen Luftleitklappe 42 angepaßt, so daß letztere in einem der Ausnehmung 9 aufgenommenen Zustand oberflächenkonform dem aerodynamischen Flächenbereich 21 abschließt. Die Luftleitklappe 42 ist einseitig und drehbeweglich an einem Gelenk 8, daß randseitlich und innerhalb der Ausnehmung 9 und nahe dem unteren Nasenrand 62 fest angeordnet ist, befestigt.

Infolge dessen läßt sich die gelenkbefestigte Luftleitklappe 42 mit ihrer (am unteren Nasenrand 62 der Einlauflippe 3) gelenkbefestigten Längskante im Winkel β von annähernd 90 Grad der Ausnehmung einklappen. Es wird ergänzt, daß der freie Randbereich der Luftleitklappe 42, der sich nahe der nicht befestigte Längskante der Luftleitklappe 42 erstreckt, mit einer Krümmung versehen ist. Diese Krümmung wendet sich im vertikal ausgeklappten Zustand (der Luftleitklappe 42) dem aerodynamischen Flächenbereich 21 der Einlauflippe 3 zu.

Der Strömungsverlauf der angesaugten Außenluft ähnelt etwa(s) dem nach der Fig. 1a, mit dem Unterschied, daß man auf dem inneren (bzw. im Inneren des Kanal-Einlaufes 1 sich befindenden (Ober-)Flächenbereich der Einlauflippe 3 keine einsetzende Strömungsablösung (mit den vorbeschriebenen Nachteilen) beobachten wird. Dabei wird die Luftströmung der in den offenen Querschnitt des Kanal-Einlaufs 1 angesaugten Außenluft 5 maßgeblich mit durch die vorerwähnte Krümmung am freien Ende der Luftleitklappe 42 und durch die vorgeschilderte Lippengestalt der Einlauflippe 3 beeinflußt. So wird die an (oder nahe) der aerodynamischen Fläche 21 (bzw. dem Außenflächenbereich) der Einbaulippe 3 angesaugte Außenluft 5 an der Außenfläche der Luftleitklappe 42, die sich in deren ausgeklappen Zustand dem offenen Querschnitt des Kanal-Einlaufes 1 zuwendet, entlangströmen. Im weiteren wird die Luftströmung (der angesaugten Außenluft 5) am oberen Nasenrand 62 mit einem ähnlichen Eintrittswinkel in das Innere des Kanal-Einlaufs 1 eintreten, der mit dem erwähnten Eintrittswinkel nach den Figuren 2 und 3 korreliert, wodurch keine Strömungsablösung auf der zum Inneren des Kanal-Einlaufes 1 gerichteten Oberfläche der Einlauflippe 3 zu beklagen wäre.

Abschließend wird erwähnt, daß durch den besonderen Einsatz des Vorflügels nach dem Vorbild der Figuren 2 und 3 die Luftströmung der angesaugten Außenluft 5 gezwungen wird, der Einlaufgeometrie des Spaltes s durch ihre Strömungsumlenkung zu folgen. Dadurch wird keine Strömungsanlösung der in das Innere des Kanal-Einlaufs 1 zwangsgeführten Saugluft auf der innenliegenden Oberfläche der Einlauflippe 3 eintreten. Ferner ist dadurch die volle Kanalhöhe des angeschlossenen Luft(rohr)leitungssystems nutzbar, wodurch die Einlaufverluste verringert sind. Damit können höhere Systemleistungen erreicht werden. Der Vorflügel ist aerodynamisch derart gestaltet, daß der Druckrückgewinn und der Interferenzwiderstand im Flugmode des Flugzeuges nicht beeinträchtigt wird.

## Patentansprüche

1. **Lufteinlaß,** der aus einem in Strömungsrichtung längsabgesenkten Kanal-Einlauf (1) besteht, um einem mit ihm verbundenen Luftleitungssystem von außerhalb eines Flugzeuges angesaugte Luft zuzuleiten, dessen offener Einlaufquerschnitt vollkommen in die Außenkontur der Oberfläche (2) des Flugzeuges eintaucht, und eine während des Fluges des Flugzeuges luftangeströmte Einlauflippe (3) aufweist, die den luftstromabwärts befindlichen Umfang des Kanal-Einlaufes (1) begrenzt und Bestandteil der Oberfläche (2) ist, dem an der Einlauflippe (3) ein aerodynamisches Luftleitelement (4) befestigt ist, mit dem das Strömungsverhalten der in den Kanal-Einlauf (1) angesaugten Außenluft (5) des am Boden parkenden oder mit Bodenhaftung rollenden Flugzeuges beeinflusst wird, **dadurch gekennzeichnet, dass** das Luftleitelement (4) ein an sich bekannter Vorflügel (41) nach dem Vorbild einer Spaltklappe ist, der unmittelbar vor dem Nasenbereich (6) der Einlauflippe (3) angeordnet ist, wobei der Nasenbereich (6) und die sich ihm zuwendende Oberfläche (7) des Vorflügels (41) einen Luftspalt (s) einschließen, durch den eine Teilmenge (51) der angesaugten Außenluft (5), die der Spaltgeometrie folgt, zwangsgeführt strömen wird wobei der Luftspalt (s) als Düse ausgeformt ist, dessen Querschnitt sich allmählich bis auf ein bestimmtes Querschnittsmaß vermindert, womit eine Beschleunigung der Teilmenge (51) der angesaugten Außenluft (5) durch den Luftspalt (s) und ein Anliegen der in den Kanal-Einlauf (1) angesaugten Außenluft (5) an der Innenseite der Einlauflippe (3) umgesetzt wird.

2. Lufteinlaß nach Anspruch 1, **dadurch gekennzeichnet, dass** die dem Nasenbereich (6) sich zuwendende Oberfläche (7) des Vorflügels (41) am oberen Nasenrandbereich (61) der Einlauflippe (3) eingangs der Öffnung des Kanal-Einlaufs (1) befestigt ist.

3. Lufteinlaß, der aus einem in Strömungsrichtung längsabgesenkten Kanal-Einlauf (1) besteht, um einem mit ihm verbundenen Luftleitungssystem von außerhalb eines Flugzeuges angesaugte Luft zuzuleiten, dessen offener Einlaufquerschnitt vollkommen in die Außenkontur der Oberfläche (2) des Flugzeuges eintaucht, und eine während des Fluges des Flugzeuges luftangeströmte Einlauflippe (3) aufweist, die den luftstromabwärts befindlichen Umfang des Kanal-Einlaufes (1) begrenzt und Bestandteil der Oberfläche (2) ist, dem an der Einlauflippe (3) ein aerodynamisches Luftleitelement (4) befestigt ist, mit dem das Strömungsverhalten der in den Kanal-Einlauf (1) angesaugten Außenluft (5) des am Boden parkenden oder mit Bodenhaftung rollenden Flugzeuges beeinflusst wird, **dadurch gekennzeichnet, dass** das Luftleitelement (4) ein an sich bekannter Vorflügel (41) nach dem Vorbild einer weitestgehend ebenflächigen Luftleitklappe (42) ist, deren eine Längskante am äußeren Nasenrand (62) der Einlauflippe (3) einseitig und drehbeweglich befestigt ist, die sich in Richtung eines luftstromabwärts befindlichen aerodynamischen Flächenbereiches (21) der Einlauflippe (3) einklappen lasst wobei der freie Randbereich der Luftleitklappe (42), der sich nahe der nicht befestigte Längskante der Luftleitklappe (42) erstreckt, mit einer Krümmung (10) versehen ist, die sich im vertikal ausgeklappten Zustand dem aerodynamischen Flächenbereich (21) der Einlauflippe (3) zuwendet.

4. **Lufteinlaß** nach Anspruch 3, **dadurch gekennzeichnet, dass** die Luftleitklappe (42) an einem Gelenk (8) befestigt ist.

## Claims

1. Air inlet, which consists of a channel intake (1) sunk longitudinally in the flow direction, in order to supply air sucked in from outside an aircraft to an air pipe system connected to the intake, the open intake cross-section of which intake is completely sunk into the outer contour of the surface (2) of the aircraft, and has an intake lip (3) against which air flows during the flight of the aircraft, which lip delimits the periphery of the channel intake (1) located downstream of the air flow and is part of the surface (2), to which part at the intake lip (3) an aerodynamic air-guiding element (4) is attached, with which the flow behaviour of the outside air (5) sucked into the channel intake (1) of the aircraft when parked on the ground or rolling in contact with the ground is influenced, **characterized in that** the air-guiding element (4) is a slat (41) known in itself according to the model of a slotted flap, which is arranged directly ahead of the nose area (6) of the intake lip (3), the nose area (6) and the surface (7) of the slat (41) facing it enclosing an air gap (s), through which a partial quantity (51) of the aspirated outside air (5), which follows the gap geometry, will flow guided, the air gap (s) being formed as a nozzle, the cross-section of which gradually diminishes to a certain cross-section dimension, with which acceleration of the partial quantity (51) of the aspirated outside air (5) through the air gap (s) and lying of the outside air (5) sucked into the channel intake (1) close to the inside of the intake lip (3) is implemented.

2. Air inlet according to claim 1, **characterized in that** the surface (7) of the slat (41) facing the nose area (6) is attached at the upper nose edge area (61) of the intake lip (3) at the entrance to the opening of the channel intake (1).

3. Air inlet, which consists of a channel intake (1) sunk longitudinally in the flow direction, in order to supply air sucked in from outside an aircraft to an air pipe system connected to the intake, the open intake cross-section of which intake is completely sunk into the outer contour of the surface (2) of the aircraft, and has an intake lip (3) against which air flows during the flight of the aircraft, which lip delimits the periphery of the channel intake (1) located downstream of the air flow and is part of the surface (2), to which part at the intake lip (3) an aerodynamic air-guiding element (4) is attached, with which the flow behaviour of the outside air (5) sucked into the channel intake (1) of the aircraft when parked on the ground or rolling in contact with the ground is influenced, **characterized in that** the air-guiding element (4) is a slat (41) known in itself according to the model of a very largely planar air-guiding flap (42), one longitudinal edge of which is attached at the outer nose edge (62) of the intake lip (3) unilaterally and to be rotationally movable and can be retracted in the direction of an aerodynamic surface area (21) of the intake lip (3) located downstream of the airflow, the free edge area of the air-guiding flap (42), which extends close to the unattached longitudinal edge of the air-guiding flap (42), being provided with a curvature (10) that in the vertically folded-out state faces the aerodynamic surface area (21) of the intake lip (3).

4. Air inlet according to claim 3, **characterized in that** the air-guiding flap (42) is attached to a hinge (8).

## Revendications

1. Prise d'air formée d'une entrée de canal (1) encastrée longitudinalement dans la direction d'écoulement, pour amener de l'air aspiré à l'extérieur d'un avion à un système de conduits d'air relié à celle-ci, dont la section d'entrée ouverte est entièrement intégrée dans le contour extérieur de la surface (2) de l'avion et présente une lèvre d'entrée (3) le long de laquelle l'air entrant s'écoule lorsque l'avion vole, et qui délimite le périmètre aval de l'entrée de canal (1) et fait partie intégrante de la surface (2), un élément aérodynamique (4) de guidage d'air par lequel l'écoulement de l'air extérieur (5) aspiré dans le canal d'entrée de l'avion en situation de parking ou de roulement avec adhérence au sol est influencé étant fixé à la lèvre d'entrée (3), **caractérisé en ce que** l'élément de guidage d'air (4) est un volet de bord d'attaque (41) connu en soi, du type volet à fente, qui est disposé immédiatement devant le nez (6) de la lèvre d'entrée (3), le nez (6) de la lèvre d'entrée et la surface (7) tournée vers celui-ci du volet de bord d'attaque (41) définissant une fente (s), dans laquelle un volume partiel (51) d'air extérieur (5) aspiré suit la géométrie de la fente et subit un écoulement forcé, et la fente (s) étant conformée en buse, dont la section décroît progressivement jusqu'à une valeur déterminée, le volume partiel (51) d'air aspiré (5) subissant ainsi une accélération dans la fente (s) et l'air extérieur (5) aspiré dans canal d'entrée (1) étant appliqué contre la face intérieure de la lèvre d'entrée (1).

2. Prise d'air selon la revendication 1, **caractérisé par le fait que** la surface (7) du volet de bord d'attaque (41) tournée vers la zone de nez (61) de la lèvre d'entrée est fixée au bord supérieur du nez (61) de la lèvre d'entrée (3) à l'entrée de l'ouverture du canal d'entrée (1).

3. Prise d'air formée d'une entrée de canal (1) encastrée longitudinalement dans la direction d'écoulement, pour amener de l'air aspiré à l'extérieur d'un avion à un système de conduits d'air relié à celle-ci, dont la section d'entrée ouverte est entièrement intégrée dans le contour extérieur de la surface (2) de l'avion et présente une lèvre d'entrée (3) le long de laquelle l'air entrant s'écoule lorsque l'avion vole, et qui délimite le périmètre aval de l'entrée de canal (1) et fait partie intégrante de la surface (2), un élément aérodynamique (4) de guidage d'air par lequel l'écoulement de l'air extérieur (5) aspiré dans le canal d'entrée de l'avion en situation de parking ou de roulement avec adhérence au sol est influencé étant fixé à la lèvre d'entrée (3), **caractérisé en ce que** l'élément de guidage d'air (4) est un volet de bord d'attaque (41) connu en soi, du type essentiellement plan, dont un grand côté est fixé avec possibilité de rotation au bord extérieur (62) du nez de la lèvre d'entrée (3) et qui peut être replié en direction d'une partie de surface (21) aérodynamique de la lèvre d'entrée (3) disposée en aval, la zone de bord libre du volet de bord d'attaque (42) située dans le voisinage du grand côté non fixé du volet de bord d'attaque (42) présentant une courbure (10) qui dans la position dépliée verticalement est tournée vers la partie surface aérodynamique de la lèvre d'entrée (3)

4. Prise d'air selon la revendication 3, **caractérisé par le fait que** le volet de bord d'attaque (42)est fixé à une articulation (8).
